# EUROPEAN PATENT APPLICATION

(11) **EP 1 310 868 A2**
(43) Date of publication of application: **14.05.2003**
(21) Application number: 02013475.5
(22) Date of filing: 14.06.2002
(51) Int. Cl.: G06F 9/445, G06F 9/40

(54) **Method and apparatus for a platform independent plug-in**

(30) Priority: 24.10.2001 US 1747
(71) Applicant: SUN MICROSYSTEMS, INC., Palo Alto, California 94303 (US)
(72) Inventor: Davidovich, Igor, Sunnyvale, California 94087 (US)
(74) Representative: HOFFMANN - EITLE

(57) **Abstract**

Embodiments of the present invention relate to an implementation of a platform independent plug-in to enable the execution of applications, for example applets, in a host application. In one or more embodiments of the present invention, a plug-in comprises a plug-in API (Application Programming Interface). A host application, for example a web browser, interacts with the plug-in through this interface. An executable launcher is integrated into the plug-in using this interface. In one or more embodiments of the present invention, the executable launcher plays Java applets and JavaBean Components. In one or more embodiments of the present invention, the plug-in is implemented in the Java language. In one or more embodiments of the present invention, the executable launcher is implemented in the Java language.

## Description

Portions of the disclosure of this patent document contain material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

### BACKGROUND OF THE INVENTION

### 1. FIELD OF THE INVENTION

The present invention relates to the implementation of a platform independent plug-in to enable the execution of applets in a web browser.

### 2. BACKGROUND ART

Plug-ins are software modules that extend the functionality of a web browser. A common use of plug-ins is to extend the browser support for specialized content such as animation.
As browser makers cannot account for all the types of content that are used on the web, plug-ins provide a mechanism for content makers to create software modules that enable browsers to display the specialized content.

Plug-ins are created to fit uniquely the browsers to which they are being installed. For example, a plug-in made for Internet Explorer™ will not work for Netscape Navigator™. Furthermore, a plug-in made for the Windows™ version of Netscape Navigator™ will not work with the Solaris™ operating system version. Because of this, software programmers implementing plug-ins must be concerned with the details of all browser types, making plug-in development difficult and non-portable.

A similar development problem also existed outside of the browser environment. For many years, software components were implemented in platform dependent programming languages. Such components were confined to a specific computer platform and could not be executed in another. For example, a software program written and compiled using Windows™ operating system could not be run on the Solaris™ operating system. To overcome this limitation, platform independent programming languages were introduced. With platform independent programming languages, software components can be developed in a single language and executed on a wide variety of computer platforms.

### Platform Independent Programming Language

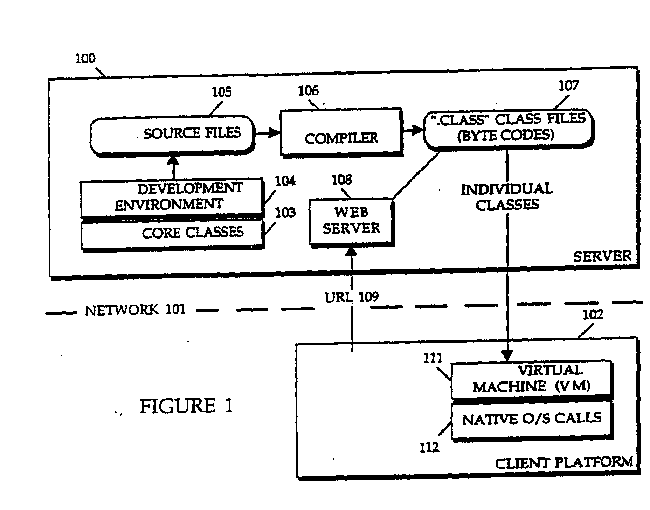

An example of a platform independent programming language is the Java technology platform. A program which utilizes Java technology is composed of a number of classes and interfaces. Unlike many programming languages, in which a program is compiled into machine-dependent, executable program code, programs which utilize Java technology are compiled into machine independent bytecode class files. Each class contains code and data in a platform-independent format called the class file format. The computer system acting as the execution vehicle contains a program called a virtual machine, which is responsible for executing the code in classes. The virtual machine provides a level of abstraction between the machine independence of the bytecode classes and the machine-dependent instruction set of the underlying computer hardware. Figure 1 is a block diagram illustrating a sample network application environment, for instance a Java technology network application environment, comprising a client platform 102 coupled over a network 101 to a server 100 for the purpose of accessing class files for execution of an application or applet.

### Sample Network Application Environment

One common application of a platform independent programming language such as Java is its usage in a networking environment. Fig. 1 is a block diagram illustrating a sample network application environment such as a Java network application environment. This diagram helps one understand how platform independent programs are created and executed in a network environment such as the Internet. Such an environment comprises of a client platform 102 coupled over a network 101 to a server 100 for the purpose of accessing class files for execution of a software application or applet. An applet is a smaller application, written in Java, that is commonly downloaded and executed across a network.

In Fig. 1, server 100 comprises development environment 104 for use in creating the source files for a given application. The development environment 104 provides a mechanism, such as an editor and an applet viewer, for the programmer to generate source files and preview applets. A set of core classes 103 comprise a library of commonly used functions that the programmer can reference. From development environment 104, the programmer creates one or more source files 105. Source files 105 contain class definitions, including data structures, method implementations and references to other classes. Source files 105 are provided to compiler 106, which compiles source files 105 into compiled ".class" files (or class files) 107 that contain bytecodes executable by a virtual machine. Bytecode class files 107 are stored (e.g., in temporary or permanent storage) on server 100, and are available for download over network 101.

Client platform 102 contains a virtual machine (VM) 111 which, through the use of available native operating system (O/S) calls 112, is able to execute bytecode class files and execute native O/S calls when necessary during execution. An example interaction between the client platform and the server is the request and response in HTTP (hypertext transport protocol). HTTP is a commonly used method for transferring HTML (hypertext markup language) documents, a type of web pages, across the Internet.

As Java class files are often referenced to within an HTML document, requests for HTML documents often trigger the transfer of compiled Java classes as well. For example, when a browser application executing on client platform 102 requests an HTML document, such as by forwarding URL (universal resource locator) 109 to web server 108, the browser automatically initiates the download of the class files 107 identified in the HTML document. Class files 107 are typically downloaded from the server and loaded into virtual machine 111 individually as needed. The virtual machine locates and loads each class file, parses the class file format, allocates memory for various components of the class, and links the class with other already loaded classes. This process makes the bytecode in the class readily executable by the virtual machine.

### Browser Plug-In Development

In contrast to the popular usage of platform independent programming languages such as Java in the internet and networking environments, the browser plug-in environment is still dominated by platform dependent programming languages such as C++. Furthermore each implementation of a web browser on the same platform has its own unique plug-in programming interfaces. For example, a plug-in for a Netscape Navigator™ browser for Windows™ is completely different than a plug-in for Internet Explorer™ for the same operating system. Thus, in plug-in development the term "platform" is extended to include details specific to both the browser and the operating system in which the browser is implemented.

In practice, the requirements for integrating a plug-in into a specific platform necessitate different versions of source code implementations. Thus when the different versions of the same plug-in are compiled, each version has a unique binary code. This platform dependence complicates the application development cycle because existing code must be ported to each new platform separately with great effort. Once all the versions are finished, subsequent improvements and changes must be implemented for each version. The diversity of code introduces error and inconsistency and eliminates the advantages associated with code reuse. The diversity also confuses web browser users trying to download the right version of the plug-in for their web browser and operating system.

### Applet Execution with Java Plug-ins

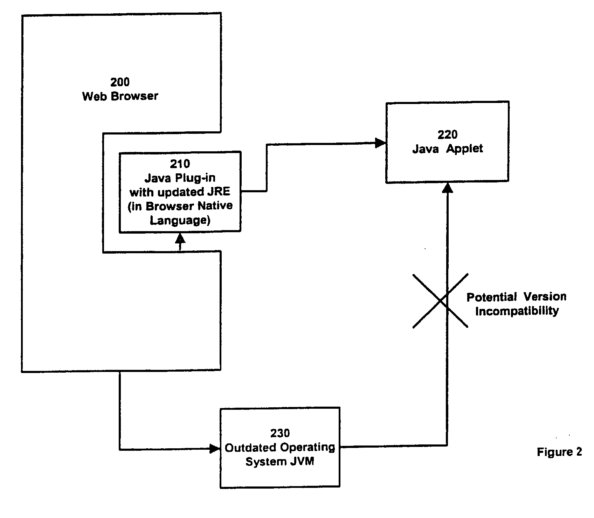

Currently there exist plug-ins that enable web browsers to launch Java Applets or JavaBeans™ components with the most updated Java Runtime Environment (JRE). These plug-ins are called Java Plug-ins. Figure 2 provides an illustration of a sample Java Plug-in. Web Browser 200 uses Java Plug-in 210 to launch Java Applet 220. Java Plug-in 210 contains the most updated JRE. Thus the web browser can run applets that use features from the latest Java version. Without Java Plug-in 210, Web Browser 200 has to rely on Operating System JVM (Java Virtual Environment) 230 to run Applet 220. Operating System JVM 230 may contain an outdated version of JRE and may cause potential incompatibility with Applet 220. Because Java Plug-in 210 can be downloaded and installed onto the browser environment at the execution time of Applet 230, Java Plug-in 210 enables Web Browser 200 to launch applets that are developed according to the latest Java specification.

The term "Java Plug-ins" is misleading because Java Plug-ins are actually implemented in the browsers' native programming languages instead of Java. Thus although Java Plug-ins are useful in enabling browsers to execute Java applets with the most updated JRE, they are platform dependent and subject to the same disadvantages and constraints of other browser plug-ins.

### SUMMARY OF THE INVENTION

It is an object of the invention to provide for a platform independent plug-in.

According to an embodiment, method for providing a plug-in comprises: incorporating an API in said plug-in, wherein said API enables said plug-in to be executed from a host application and data to be transmitted between said plug-in and said host application; using said API to create a functional module wherein said functional module extends functionality of said host application; and integrating said plug-in into said host application.

The functional module may be an executable launcher wherein said API allows said host application to launch executables via said executable launcher, and/or the executable may be Java applets and JavaBean components.

The plug-in and/or the executable launcher may be written in a platform independent programming language, e.g. the Java programming language.

The data may further comprise an applet location, an applet identification information and an input data stream and/or the host application may be a web browser.

Moreover, the API may be a pluglet API which further comprises: a pluglet factory interface wherein an instance of said plug-in can be instantiated by said host application; a pluglet interface defining the requirements for a plug-in implementation; and a pluglet stream listener interface enabling data transfer between said plug-in and said host application.

The pluglet API may use a pluglet engine API to communicate with said host application and wherein said pluglet engine API allows said host application and said pluglet API to access a Java Virtual Machine (JVM).

Still further, the pluglet engine API may comprise: a pluglet manager interface enabling information be passed between said host application and sad plug-in; a pluglet peer interface defining compatiblility requirements for host applications to run said plug-in; a pluglet tag information interface wherein HTML tag information for said plug-in is provided; and a pluglet stream information interface allowing said plug-in to access information on data streams sent to said plug-in. Said integrating may further comprise writing a manifest file for said plug-in.

Further, a program may have instructions adapted to make a computer carry out the above operations and a computer readable medium may include the program.

According to another embodiment, a computer program product comprises: a computer usable medium having computer readable program code embodied therein configured to integrate a plug-in, said computer program product comprising: computer readable code configured to cause a computer to incorporate an API in said plug-in, wherein said API enables said plug-in to be executed from a host application and data to be transmitted between said plug-in and said host application; computer readable code configured to cause a computer to use said API to create a functional module wherein said functional module extends functionality of said host application; and computer readable code configured to cause a computer to integrate said plug-in into said host application.

According to another embodiment, an apparatus comprises: an API configured to be incorporated in a plug-in, wherein said API enables said plug-in to be executed from a host application and data to be transmitted between said plug-in and said host application; and a functional module configured to be created using said API wherein said functional module extends functionality of said host application.

Further embodiments of the invention are disclosed in further claims.

### BRIEF DESCRIPTION OF THE DRAWINGS

These and other features, aspects and advantages of the present invention will become better understood with regard to the following description, appended claims and accompanying drawings where:
- Fig. 1:: is a diagram of a sample network application environment.
- Fig. 2:: shows a sample Java Plug-in implementation.
- Fig. 3A:: shows a platform independent plug-in architecture according to an embodiment of the present invention.
- Fig. 3B:: shows a platform independent plug-in architecture according to another embodiment of the present invention.
- Fig. 4A:: is a flowchart of a method for integrating an executable launcher into a web browser according to an embodiment of the present invention.
- Fig. 4B:: is a flowchart of a method for integrating an executable launcher into a web browser according to another embodiment of the present invention.
- Fig. 4C:: is a flowchart showing the usage of an integrated plug-in to an embodiment of the present invention.
- Fig. 5A:: is a diagram illustrating the architecture of an platform independent plug-in implementation according to one embodiment of the present invention.
- Fig. 5B:: is a diagram illustrating how platform independent plug-in interacts with a web browser according to one embodiment of the present invention.
- Fig. 5C:: is a diagram illustrating how platform independent plug-in interacts with a web browser according to another embodiment of the present invention.
- Fig. 6:: shows an API architecture for an embodiment of a platform independent plug-in.
- Fig. 7:: is a flowchart showing the development and execution process of a pluglet according to one embodiment of the present invention.
- Fig. 8:: is a general purpose computer embodiment.

### DETAILED DESCRIPTION OF THE INVENTION

In the following description, numerous specific details are set forth to provide a more thorough description of embodiments of the present invention. It will be apparent, however, to one skilled in the art, that the present invention may be practiced without these specific details. In other instances, well known features have not been described in detail so as not to obscure the present invention.

Embodiments of the present invention relate to an implementation of a platform independent plug-in to enable the execution of applications, for example applets, in a host application. The platform independent nature of the plug-in allows it to be developed in source code, and transformed into binary code only once. The binary code, in turn, can be used in any platform that supports plug-ins, such as Netscape Navigator™, Internet Explorer™, and others. Further, the plug-in can be ported between different platforms without changing the source code.

In one or more embodiments of the present invention, a plug-in comprises a plug-in API (Application Programming Interface). A host application, for example a web browser, interacts with the plug-in through this interface. An executable launcher is integrated into the plug-in using this interface. In one or more embodiments of the present invention, the executable launcher plays Java applets and JavaBean Components, thus enabling browsers to use the latest Java Runtime Environment (JRE) for execution Java applets and JavaBean Components. In one or more embodiments of the present invention, the plug-in is implemented in the Java language. In one or more embodiments of the present invention, the executable launcher is implemented in the Java language.

### Platform Independent Plug-In Architecture

Fig. 3A illustrates a plug-in architecture according to an embodiment of the present invention. Platform Independent Plug-in 300 is comprised of Functional Module 318. Functional Module 318 implements Plug-in API 312. A software module is said to implement an API when it has methods and variables that satisfy the requirements of the API. The dotted line around Plug-in API 312 signifies that it is being implemented rather than being physically included within Platform Independent Plug-in 300. The interfaces and methods specified by Plug-in API 312 have three main functions. First, they allow Functional Module 318 to interact with a web browser. Second, they enable Platform Independent Plug-in 300 to be executed from the web browser by providing it methods to instantiate and control Functional Module 318. Third, they facilitate data transmission between Platform Independent Plug-in 300 and the web browser. Function Module 318 can be programmed to perform a wide variety of common plug-in tasks such as playing multimedia files music or displaying DOM (Document Object Model) structures. This flexibility enables a platform independent plug-in to replace many existing platform dependent plug-ins.

In one or more embodiments of the present invention, Functional Module 318 is implemented in a platform independent programming language such as Java. A plug-in implementation in a platform independent programming language means that one source code base may be used for all operating systems and browsers. The use of one source code base maximizes programming efficiency, provides the opportunity for code re-use, and minimizes versioning complications and programming errors.

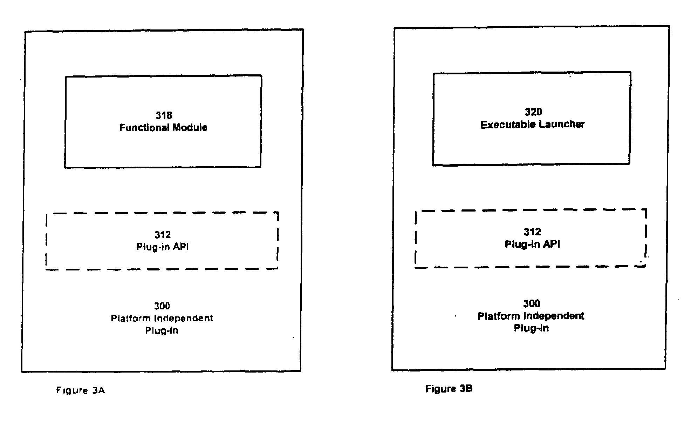

Fig. 3B illustrates a plug-in architecture according to another embodiment of the present invention. Platform Independent Plug-in 300 is comprised of Executable Launcher 320. Executable Launcher 320 implements Plug-in API 312. A software module is said to implement an API when it has methods and variables that satisfy the requirements of the API. Again the dotted line around Plug-in API 312 signifies that it is being implemented rather than being physically included within Platform Independent Plug-in 300. Similar to the embodiment shown in Fig. 3A, the interfaces and methods specified by Plug-in API 312 have three main functions. First, they allow Executable Launcher 320 to interact with a web browser. Second, they enable Platform Independent Plug-in 300 to be executed from the web browser by providing it methods to instantiate and control Executable Launcher 320. Third, they facilitate data transmission between Platform Independent Plug-in 300 and the web browser. In one or more embodiments of the present invention, browsers can use Executable Launcher 320 to launch Java applets or JavaBeans components, enabling Platform Independent Plug-in 300 perform the tasks of a Java Plug-in.

A Java Plug-in, as described in Fig. 2, is a software module that serves as a bridge between a web browser and an external Java Runtime Environment (JRE). Java Plug-ins enable browsers to run Java applets or JavaBeans components that have access to all the features of this external JRE (within the limits of Java's security model). However, Java Plug-ins are not platform independent. In contrast, in one or more embodiments of the present invention, Executable Launcher 320 is implemented in a platform independent programming language such as Java. Implementing in a platform independent programming language such as Java is an advantage because source code can be reused in across different platforms. The use of one source code base maximizes programming efficiency, provides the opportunity for code re-use, and minimizes versioning complications and programming errors. Thus embodiments of the present invention overcomes the platform dependency nature of Java Plug-ins while providing the same functionality.

### Platform Independent Plug-in Development and Usage

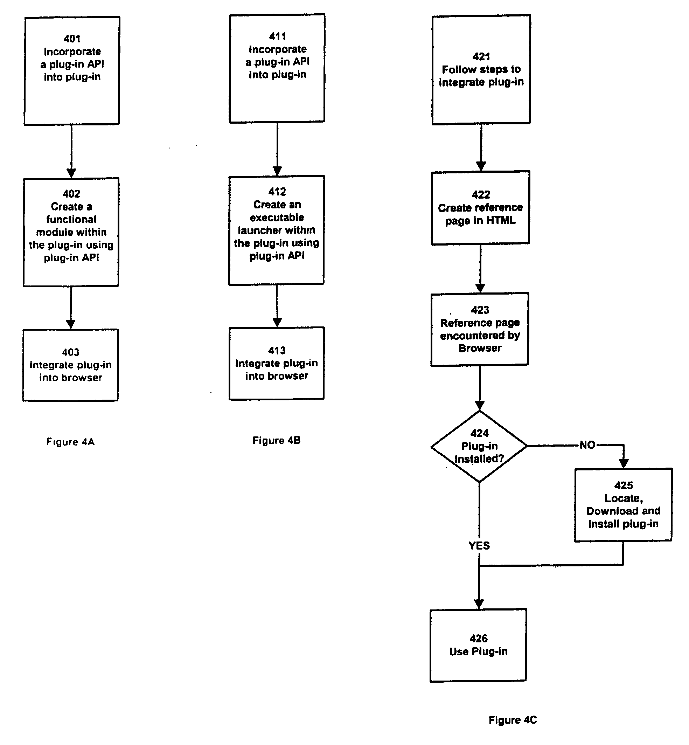

Fig. 4A shows the development and integration of a platform independent plug-in according to one embodiment of the present invention. At box 401 a programmer incorporates a plug-in API (Application Programming Interface) into the plug-in. In one embodiment of the present invention, the API corresponds to Plug-in API 312 of Fig. 3A and enables the plug-in to be executed from a host application and data be transmitted between the plug-in and the host application. At box 402, the programmer creates a functional module using the plug-in API. In one or more embodiments of the present invention, the functional module and the plug-in are in a platform independent programming language. In one or more embodiments of the present invention, the platform independent programming language is Java. At box 403 the plug-in is integrated into a host application such as a browser.

Fig. 4B shows the development and integration of a platform independent plug-in according to another embodiment of the present invention. At box 411 a programmer incorporates a plug-in API (Application Programming Interface) into the plug-in. In one embodiment of the present invention, the API corresponds to Plug-in API 312 of Fig. 3B and enables the plug-in to be executed from a host application and data be transmitted between the plug-in and the host application. At box 412, the programmer creates an executable launcher using the plug-in API. In one or more embodiments of the present invention, the executable launcher and the plug-in are in a platform independent programming language. In one or more embodiments of the present invention, the platform independent programming language is Java. At box 413 the plug-in is integrated into a host application such as a browser.

Fig. 4C shows how a platform independent plug-in may be used in one embodiment of the present invention. At box 421, the programmer follows the necessary steps to integrate the plug-in into the browser. At box 422, the programmer creates a reference to the plug-in in HTML on a web page. When the HTML is encountered by a browser at box 423, a determination is made at box 424 as to whether the plug-in has been previously installed. If not, the plug-in is located, downloaded and installed into the browser at box 425. The plug-in may be located, for example, on an external computer network accessible via the HTTP protocol. At box 426, the plug-in is used within the browser, if the plug-in has been installed at box 424 or at box 425.

### Platform Independent Plug-in API

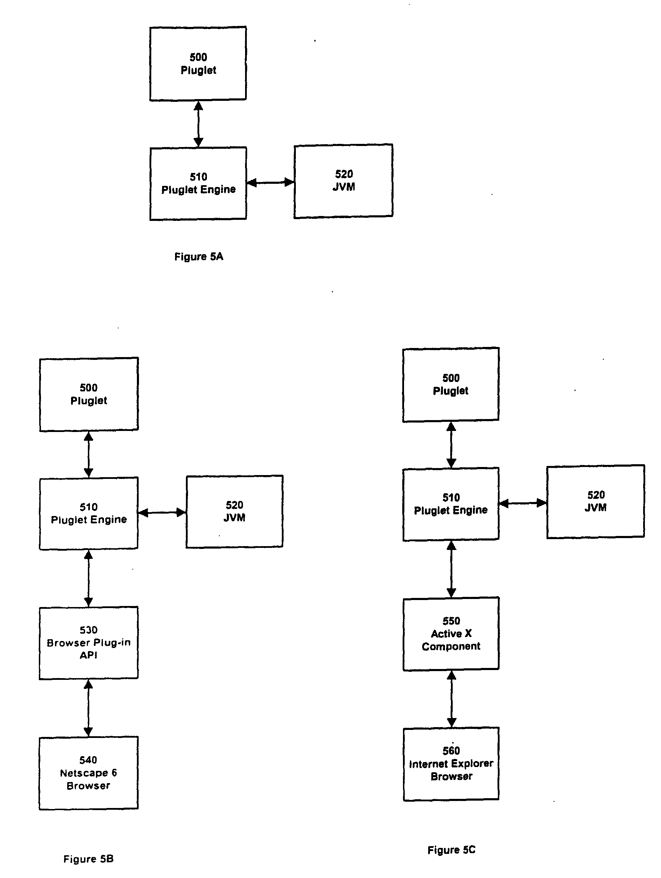

In one embodiment of the present invention, platform independent plug-ins are implemented in Java and termed "Pluglets." Fig. 5A is a block diagram illustrating the interaction among Pluglet 500, Pluglet Engine 510 and Java Virtual Machine (JVM) 520 in one embodiment of the present invention. JVM 520 provides the JRE needed to run the Java based Pluglet 500 on the computer platform. Pluglet Engine 510 serves as the bridge between Pluglet 500 and JVM 520.

In one embodiment of the present invention, a browser interacts with Pluglet 500 through Pluglet Engine 510. Fig. 5B illustrates an embodiment of the present invention in which Netscape™ 6 Browser 540 uses its Browser Plug-in 530 to communicate with Pluglet Engine 510, which in turns provides access to Pluglet 500. Fig. 5C illustrates another embodiment of the present invention in which the Internet Explorer™ Browser 560 uses its Active X™ Component 550 to communicate with Pluglet Engine 510, which in turns provides access to Pluglet 500. In both embodiments of the present invention, pluglets are implemented in Java and the browsers are implemented in their native programming languages.

### Pluglet API

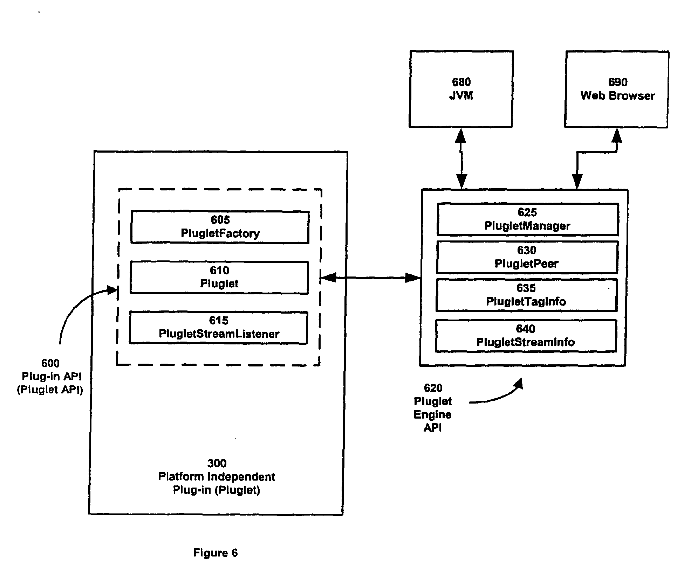

The Pluglet API architecture for one embodiment of the present invention is illustrated in Fig. 6. Referring again to Figs. 3A and 3B, Plug-in API 312 enables Plug-in 300 to interact with a web browser. Pluglet API 600 is an embodiment of Plug-in API 312. Platform Independent Plug-in 300 (Pluglet) developed according to Pluglet API 600 interacts with Web Browser 690 through Pluglet Engine API 620. Pluglet API 600 comprises the following interfaces - PlugletFactory 605, Pluglet 610 and PlugletStreamListener 615. Pluglet Engine API 620 comprises the following interfaces - Pluglet Manager 625, PlugletPeer 630, PlugletTagInfo 635 and PlugletStreamInfo 640.
The interfaces in Pluglet Engine API 620 handle the interaction between the interfaces in Pluglet API 600 and Web Browser 690. It allows pluglets using Pluglet API 600 to access information and functions within Web Browser 690. It also ensures pluglets have access to a JVM (Java Virtual Machine) 680. Within the API, PlugletManager 625 provides information about Web Browser 690 to pluglet instances to facilitate interaction between them. For example, since a pluglet cannot directly get to a URL (Uniformed Resource Locator), it can use PlugletManager 625 to access the a URL within the network connection of Web Browser 690. PlugletManager 625 also allows pluglet instances to obtain configuration information about Web Browser 690. PlugletPeer 630 allows pluglets developed according to Pluglet API 600 to have compatibility with Web Browser 690 at the functional level. As Web Browser 690 implements the functional requirements defined by PlugletPeer 630, it gains compatibility with pluglets. As pluglets are referenced by HTML pages on Web Browser 690, PlugletTagInfo 635 provides information on the referencing HTML tags to the pluglets. Finally, PlugletStreamInfo 640 provides stream data information of Web Browser 690 to the pluglet instances.

The interfaces in Pluglet API 600 (PlugletFactory interface 605, Pluglet interface 610 and PlugletStreamListener interface 615) are required for pluglet implementation. To create a pluglet, a developer implements the three interfaces and writes a corresponding manifest file. Manifest files contain MIME (Multipurpose Internet Mail Extensions) type information used to describe the functional purpose of pluglets. For example, a pluglet can have an applet MIME type in its manifest file to indicate that it plays an applet. Other common MIME types include compressed files, video animation, music files, etc.

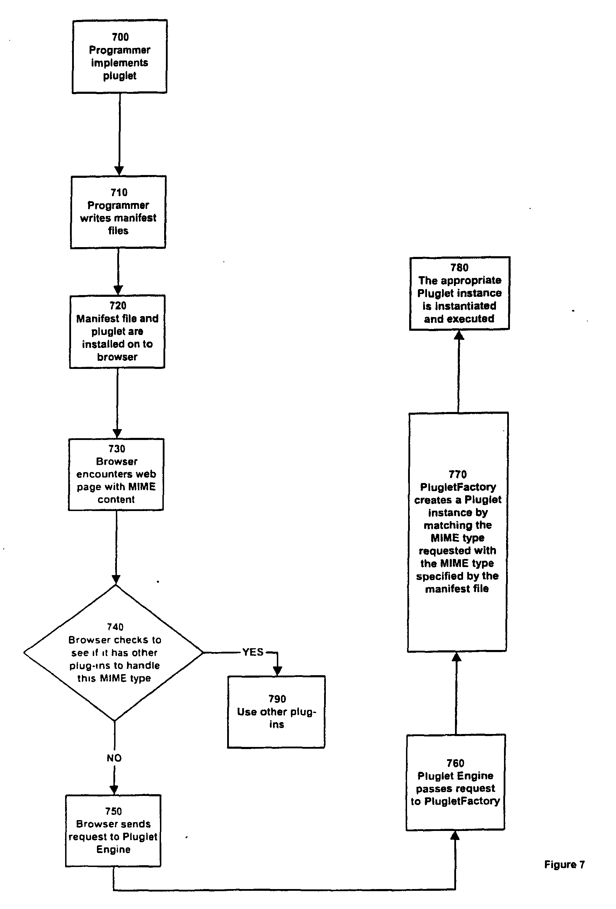

Fig. 7 illustrates the process of pluglet development and execution. At box 700, a programmer implements a pluglet. At box 710, the programmer writes the corresponding manifest file for the pluglet. At box 720, the manifest file and the pluglet are installed onto the web browser. In some instances the event at box 720 happens before box 730, when the browser encounters a web page with MIME content. In some instances, the event at box 720 takes place at the same time as box 730. For example, a browser may automatically download and install the pluglet and the manifest file upon encountering a web page with MIME content. At box 740, the browser checks to see if there are other non platform independent plug-ins that can handle this MIME type. If so, the non platform independent plug-in is used at box 790. If not, at box 750 the browser sends a request for a pluglet to the Pluglet Engine API. Then at box 760 the Pluglet Engine API passes the request to a PlugletFactory instance. At box 770, the PlugletFactory instance creates a Pluglet instance that has a matching MIME type specified in its manifest file. Since there may be many different pluglets installed, the PlugletFactory instance has to pick the correct pluglet for the MIME type requested. An example of this occurs when an applet MIME type is specified, the PlugletFactory instance searches through all the manifest files installed on the computer for the pluglet that plays a Java applet. At box 780 the appropriate Pluglet instance is instantiated and executed. Other interfaces such as PlugletStream and PlugletStreamInfo are instantiated at time of execution. In the applet example, the execution of the pluglet requires that a data stream containing the Java applet code be downloaded from the Internet. Thus the pluglet uses the PlugletStreamInfo instance to learn about the location of the applet stream from the browser and uses PlugletStreamListener instance to handle the incoming data stream.

Programmatically, a PlugletFactory instance creates a new Pluglet instance based on a MIME type. The implementation of PlugletFactory interface 605 comprises the following statement:
createPluglet(String MIMEType)
where MIMEType is a string identifying a Pluglet implementation. This statement takes the MIME type and instantiates a matching Pluglet instance.

The Pluglet interface comprises the following statements:
initialize(PlugletPeer peer)
PlugletStreamListener newStream()
where PlugletPeer is an interface comprising functions implemented by a browser to support a Pluglet instance. As shown by the first statement, when a Pluglet instance is constructed, a PlugletPeer object is passed to its initializer function. The PlugletPeer object represents the instantiation of the Pluglet instance on the web page within the web browser. This step is crucial in establishing the functional link between the web browser and the Pluglet instance. The newStream() method creates an instance of PlugletStreamListener. A stream is defined as input data that is fed to the Pluglet. A PlugletStreamListener is a stream listener that provides various methods, such as notification that data is available in the input stream, that the URL has started to load, and that it has stopped loading. Once the data stream is in place the pluglet can begin to operate the input data (e.g. playing the applet code stream or video stream).

A more detailed description of Pluglet API and Pluglet Engine API is set forth below.

### Interface ByteRanges

This interface is for setting up a range of bytes. The ByteRanges interface exposes the following method:
- void - addRange(int offset, int length) Sets a range of bytes, given an offset and a length.
addRange
public void addRange(int offset, int length)

Sets a range of bytes, given an offset and a length. If offset is negative, then the offset is from the end.

### Parameters:

offset - This is the offset for the range of bytes -- from the beginning if offset is positive, from the end if offset is negative.
length - This is the length of the range of bytes; i.e., the number of bytes.

### Interface Pluglet

A Pluglet is a Plugin written in the Java programming language. It is dispatched when a certain MIME type is encountered by a browser. This interface includes functions to initialize, start, stop, destroy, and print an instance of Pluglet.
- void - destroy()
   Called to instruct the Pluglet instance to destroy itself.
- void - initialize (PlugletPeer peer)
   Initializes a newly created Pluglet instance, passing to it an instance of PlugletPeer, which it should use for communication with the browser.
- PlugletStreamListener - newStream()
   This is called to tell the Pluglet instance that the stream data for an SRC or DATA attribute (corresponding to an EMBED or OBJECT tag) is ready to be read; it is also called for a full-page Pluglet.
- void - print(Java.awt.print.PrinterJob printerJob)
   Called to instruct the Pluglet instance to print itself to a printer.
- void - setWindow(Java.awt.Frame frame)
   Called by the browser to set or change the frame containing the Pluglet instance.
- void - start()
   Called to instruct the Pluglet instance to start.
- void - stop ()
   Called to instruct the Pluglet instance to stop and suspend its state.
initialize
public void initialize(PlugletPeer peer)

Initializes a newly created Pluglet instance, passing to it an instance of PlugletPeer, which it should use for communication with the browser.

### Parameters:

peer - This is the instance of PlugletPeer that should be used for communication with the browser.
start
public void start()

Called to instruct the Pluglet instance to start. This will be called after the Pluglet is first created and initialized, and may be called after the Pluglet is stopped (via the stop() method) if the Pluglet instance is revisited in the browser window's history.
stop
public void stop()

Called to instruct the Pluglet instance to stop and suspend its state. This method will be called whenever the browser window displays another page and the page containing the Pluglet goes into the browser's history list.
destroy
public void destroy()

Called to instruct the Pluglet instance to destroy itself. This is called when it is no longer possible to return to the Pluglet instance -- either because the browser window's history list of pages is being trimmed, or because the window containing this page in the history is being closed.
newStream
public PlugletStreamListener newStream()

This is called to tell the Pluglet instance that the stream data for an SRC or DATA attribute (corresponding to an EMBED or OBJECT tag) is ready to be read; it is also called for a full-page Pluglet. The Pluglet is expected to return an instance of PlugletStreamListener, to which data and notifications will be sent.

### Returns:

PlugletStreamListener instance, the listener the browser will use to give the Pluglet the data.
setWindow
public void setWindow(Java.awt.Frame frame)

Called by the browser to set or change the frame containing the Pluglet instance.

### Parameters:

frame - the Pluglet instance frame that changes.
print
public void print(Java.awt.print.PrinterJob printerJob)

Called to instruct the Pluglet instance to print itself to a printer.

### Parameters:

printerJob - This is an object of type PrinterJob. It is used to control printing.

### Interface PlugletFactory

This interface includes the functions to create an instance of Pluglet, and initialize the PlugletFactory instance and shut it down when no longer required.
- Pluglet - createPluglet(Java.lang.String mimeType)
   Creates a new Pluglet instance based on a MIME type.
- void - initialize (PlugletManager manager)
   Initializes the PlugletFactory instance and is called before any new Pluglet instances are created.
- void - shutdown()
   Called when the browser is done with a PlugletFactory instance.
createPluglet
public Pluglet createPluglet(Java.lang.String mimeType)

Creates a new Pluglet instance based on a MIME type. This allows different implementations to be created depending on the specified MIME type.

While normally there will be only one PlugletFactory implementation and one instance of it, there can be multiple implementations of Pluglet and instances of them. Given a MIME type, it is the responsibility of the createPluglet method to create an instance of the implementation of Pluglet for that MIME type. (Note: A single implementation of the Pluglet interface could handle more than one MIME type; there may also be separate implementations of the Pluglet interface for MIME types. This is up to the developer implementing the Pluglet interface.)

### Parameters:

mimeType - This is the MIME type for which a new Pluglet instance is to be created.

### Returns:

Returns a new Pluglet instance based on the specified MIME type passed to the method.
initialize
public void initialize(PlugletManager manager)

Initializes the PlugletFactory instance and is called before any new Pluglet instances are created.

### Parameters:

manager - This is an instance of PlugletManager that is passed to this method.
shutdown
public void shutdown()

Called when the browser is done with a PlugletFactory instance. Normally there is only one PlugletFactory instance.

### Interface PlugletManager

All Known Subinterfaces:
PlugletManager2

The PlugletManager interface includes functionality to get and post URLs and return userAgent for the browser. It also includes a function for reloading all Pluglets in the Pluglets directory, allowing Pluglets to be installed and run without restarting the browser.
- void - getURL (Pluglet pluglet, Java.net.URL url, Java.lang.String target, PlugletStreamListener streamListener, Java.lang.String altHost, Java.net.URL referrer, boolean forceJSEnabled) Fetches a URL.
- void - postURL (Pluglet pluglet, Java.net.URL url, int postDataLen, byte[] postData, boolean isFile, Java.lang.String target, PlugletStreamListener streamListener, Java.lang.String altHost, Java.net.URL referrer, boolean forceJSEnabled, int postHeadersLength, byte[] postHeaders) Posts to a URL with post data and/or post headers.
- void - reloadPluglets(boolean reloadPages) This method reloads all Pluglets in the Pluglets directory.
- Java.lang.String - userAgent() Returns the userAgent String for the browser.
reloadPluglets
public void reloadPluglets(boolean reloadPages)

This method reloads all Pluglets in the Pluglets directory. The browser knows about all installed Pluglets (and Plugins) at startup. But if the user adds or removes any Pluglets (or Plugins), the browser does not see them until it is restarted. This method lets the user install a new Pluglet and load it, or remove one, without having to restart the browser.

### Parameters:

reloadPages - Boolean value indicates whether currently visible pages should also be reloaded.
userAgent
public Java.lang.String userAgent()

Returns the userAgent String for the browser. userAgent is a property of the navigator object and contains information about the browser.

### Returns:

Returns a String for the userAgent for the browser.
getURL
public void getURL(Pluglet pluglet,
Java.net.URL url,
Java.lang.String target,
PlugletStreamListener streamListener,
Java.lang.String altHost,
Java.net.URL referrer,
boolean forceJSEnabled)
Fetches a URL.

### Parameters:

pluglet - This is the Pluglet instance making the request. If null, the URL is fetched in the background.
url - This is the URL to fetch.
target - This is the target window into which to load the URL.
streamListener - This is an instance of PlugletStreamListener.
altHost - This is an IP-address string that will be used instead of the host specified in the URL. This is used to prevent DNS-spoofing attacks. It can be defaulted to null, which will mean: use the host in the URL.
referrer - This is the referring URL. (It may be null).
forceJSEnabled - This will force JavaScript to be enabled for javascript: URLs, even if the user currently has JavaScript disabled. (Usually this should be set false.)
postURL
public void postURL(Pluglet pluglet,
Java.net.URL url,
int postDataLen,
byte[] postData,
boolean isFile,
Java.lang.String target,
PlugletStreamListener streamListener,
Java.lang.String altHost,
Java.net.URL referrer,
boolean forceJSEnabled,
int postHeadersLength,
byte[] postHeaders) Posts to a URL with post data and/or post headers.

### Parameters:

pluglet - This is the Pluglet instance making the request. If null, the URL is fetched in the background.
ur1 - This is the URL to fetch.
postDataLen - This is the length of postData (if not null).
postData - This is the data to post. null specifies that there is no post data.
   isFile - This indicates whether postData specifies the name of a file to post rather than data. The file will be deleted afterwards.
target - This is the target window into which to load the URL.
streamListener - This is an instance of PlugletStreamListner.
altHost - This is an IP-address string that will be used instead of the host specified in the URL. This is used to prevent DNS-spoofing attacks. It can be defaulted to null, which will mean: use the host in the URL.
referrer - This is the referring URL. (It may be null.)
forceJSEnabled - This will force JavaScript to be enabled for javascript: URLs, even if the user currently has JavaScript disabled (usually specify false).
postHeadersLength - This is the length of postHeaders (if not null).
postHeaders - These are the headers to POST. null specifies that there are no post headers.

### Interface PlugletManager2

This interface extends the functionality of the PlugletManager interface, including methods to begin and end a wait cursor, determine if a URL protocol is supported, and get proxy information for a URL.
- void - beginWaitCursor()
   Puts up a wait cursor.
- void - endWaitCursor()
   Restores the previous (non-wait) cursor.
- Java.lang.String - findProxyForURL(Java.net.URL url)
   For a given URL, this method returns a String for the proxy information.
- boolean - supportsURLProtocol (Java.lang.String protocol)
   Returns true if a URL protocol (e.g., http) is supported.
Methods inherited from interface
org.mozilla.pluglet.mozilla.PlugletManager
getURL, postURL, reloadPluglets, userAgent
beginWaitCursor
public void beginWaitCursor()
Puts up a wait cursor.
endWaitCursor
public void endWaitCursor()
Restores the previous (non-wait) cursor.
supportsURLProtocol
public boolean supportsURLProtocol(Java.lang.String protocol)
Returns true if a URL protocol (e.g., http) is supported.

### Parameters:

protocol - This is the protocol name.

### Returns:

Boolean returns true if the URL protocol is supported.
findProxyForURL
public Java.lang.String findProxyForURL(Java.net.URL url)

For a given URL, this method returns a String for the proxy information. The result will be in the following format:
- DIRECT -- means no proxy required
- PROXY xxx.xxx.xxx.xxx -- use proxy (where xxx.xxx.xxx.xxx is the IP Address)
- SOCKS xxx.xxx.xxx.xxx -- use SOCKS (where xxx.xxx.xxx.xxx is the IP Address)
- Mixed. e.g., PROXY 111.111.111.111;PROXY 112.112.112.112; PROXY 111.111.111.111;SOCKS 112.112.112.112 ....

Which proxy/SOCKS to use is determined by the Pluglet.

### Parameters:

url - This is the URL for which proxy information is desired.

### Returns:

Information (String) about the proxy. See above for the format.

### Interface PlugletPeer

The PlugletPeer interface is the set of functions implemented by the browser to support a Pluglet instance. When a Pluglet instance is constructed, a PlugeletPeer object is passed to its initializer. The peer object represents the instantiation of the Pluglet instance on the page.
- static int - NETSCAPE WINDOW
   This is a static final integer variable set to 3.
- Java.lang.String - getMIMEType()
   Returns the MIME type of the Pluglet instance.
- int - getMode()
   Returns an int (integer value) indicating whether the Pluglet is embedded in HTML in the page via an OBJECT or EMBED element and is part of the page, or whether the Pluglet is in a full page of its own.
- PlugletTagInfo - getTagInfo()
   For the Pluglet instance, returns the tag information associated with it.
- Java.lang.String - getValue(int variable)
   Returns the value of a variable associated with the PlugletManager instance.
- Java.io.OutputStream - newStream(Java.lang.String type, Java.lang.String target)
   This method is called by the Pluglet instance when it wishes to send a stream of data to the browser.
- void - setWindowSize(int width, int height)
   Sets the desired size of the window associated with the Pluglet instance.
- void - showStatus(Java.lang.String message)
   Invoking this method causes status information to be displayed at the bottom of the window associated with the Pluglet instance.
NETSCAPE WINDOW
public static final int NETSCAPE_WINDOW

This is a static final integer variable set to 3.
getMIMEType
public Java.lang.String getMIMEType()
Returns the MIME type of the Pluglet instance.

### Returns:

Returns a String for the MIME type of the Pluglet instance.
getMode
public int getMode()

Returns an int (integer value) indicating whether the Pluglet is embedded in HTML in the page via an OBJECT or EMBED element and is part of the page, or whether the Pluglet is in a full page of its own.

A full-page Pluglet can occur when a file of the Pluglet MIME type is entered in the Address/URL field of the browser; when JavaScript sets the document URL (document.URL) to that file; or when an applet redirects the browser to the file (via Java.net.HttpURLConnection).

### Returns:

Returns an int (integer value) representing the mode. A value of 1 indicates the Pluglet is embedded in a page; a value of 2 indicates it is in a full page of its own.
getValue
public Java.lang.String getValue(int variable)
Returns the value of a variable associated with the PlugletManager instance.

### Parameters:

variable - This is the PlugletManager instance variable to get.

### Returns:

Returns a String representing the value of the variable.
newStream
public Java.io.OutputStream newStream(Java.lang.String type, Java.lang.String target)

This method is called by the Pluglet instance when it wishes to send a stream of data to the browser. It constructs a new output stream to which the Pluglet instance may send data.

### Parameters:

type - The MIME type of the stream to create.
target - The name of the target window to receive the data.

### Returns

Returns the resulting output stream.
showStatus
public void showStatus(Java.lang.String message)

Invoking this method causes status information to be displayed at the bottom of the window associated with the Pluglet instance.

### Parameters:

message - This is the status message to display.
setWindowSize
public void setWindowSize(int width, int height)
Sets the desired size of the window associated with the Pluglet instance.

### Parameters:

width - The width of the new window.
height - The height of the new window.
getTagInfo
public PlugletTagInfo getTagInfo()

For the Pluglet instance, returns the tag information associated with it. This is an object of type PlugletTagInfo, which contains all the name-value pairs for the attributes of the tag/element.

### Returns:

Gets the Pluglet instance tag information.

### Interface PlugletStreamInfo

This interface returns various information about the stream such as the MIME type and whether the stream is seekable.
- Java.lang.String - getContentType()
   Returns the MIME type for a particular stream.
- int - getLastModified()
   Returns the time the data in the URL was last modified, measured in seconds since 12:00 midnight, GMT, January 1, 1970.
- int - getLength()
   Returns the length of a stream in bytes.
- Java.lang.String - getURL()
   Specifies the URL that was used to originally request the stream.
- boolean - isSeekable()
   Indicates if a stream is seekable; that is, if it is possible to move to a particular point in the stream.
- void - reguestRead(ByteRanges ranges)
   Requests reading from the input stream.
getContentType
public Java.lang.String getContentType()
Returns the MIME type for a particular stream.

### Returns:

As stated above, returns the MIME type.
isSeekable
public boolean isSeekable()

Indicates if a stream is seekable; that is, if it is possible to move to a particular point in the stream.

### Returns:

Returns true if the stream is seekable.
getLength
public int getLength()
Returns the length of a stream in bytes.
getLastModified
public int getLastModified()

Returns the time the data in the URL was last modified, measured in seconds since 12:00 midnight, GMT, January 1, 1970.

### Returns:

Returns an integer value for the time since last modification, as described above.
getURL
public Java.lang.String getURL()

Specifies the URL that was used to originally request the stream.

### Returns:

Returns a String for the URL as described above.
requestRead
public void requestRead(ByteRanges ranges)
Requests reading from the input stream.

### Interface PlugletStreamListener

This is a stream listener that provides various methods, such as notification that data is available in the input stream, that the URL has started to load, that it has stopped loading, etc.
- static int - STREAM_TYPE_AS_FILE
   Indicates file stream type.
- static int - STREAM_TYPE_AS_FILE_ONLY
   Indicates file-only stream type.
- static int - STREAM_TYPE_NORMAL
   Indicates normal stream type.
- static int - STREAM_TYPE_SEEK
   Indicates seek stream type.
- int - getStreamType()
   Returns the type of stream.
- void - onDataAvailable (PlugletStreamInfo streamInfo, Java.io.InputStream input, int length)
   This would be called by the browser to indicate that data is available in the input stream.
- void - onFileAvailable (PlugletStreamInfo streamInfo, Java.lang.String fileName)
   This would be called by the browser to indicate the availability of a local file name for the stream data.
- void - onStartBinding(PlugletStreamInfo streamInfo)
   This would be called by the browser to indicate that the URL has started to load.
- void - onStopBinding (PlugletStreamInfo streamInfo, int status)
   This would be called by the browser to indicate that the URL has finished loading.
STREAM TYPE NORMAL
public static final int STREAM_TYPE_NORMAL
Indicates normal stream type. This is a fixed integer value = 1.
In this mode, the browser "pushes" data to the Pluglet as it arrives from the network.
STREAM TYPE SEEK
public static final int STREAM_TYPE_SEEK Indicates seek stream type. This is a fixed integer value = 2.

In this mode, the Pluglet can randomly access ("pull") stream data.
STREAM TYPE AS FILE
public static final int STREAM_TYPE_AS_FILE
Indicates file stream type. This is a fixed integer value = 3.

In this mode, the browser delivers ("pushes") data to the Pluglet as data is saved to a local file. The data is delivered to the Pluglet via a series of write calls.
STREAM TYPE AS FILE ONLY
public static final int STREAM_TYPE_AS_FILE_ONLY
Indicates file-only stream type. This is a fixed integer value = 4.

In this mode, the browser saves stream data to a local file and when it is done, it sends the full path of the file to the Pluglet (which can then "pull" the data).
onStartBinding
public void onStartBinding(PlugletStreamInfo streamInfo)

This would be called by the browser to indicate that the URL has started to load. This method is called only once -- when the URL starts to load.

### Parameters:

plugletInfo - This is the interface (of type PlugletStreamInfo) through which the listener can get specific information about the stream, such as MIME type, URL, date modified, etc.
onDataAvailable public void onDataAvailable(
PlugletStreamInfo streamInfo,
Java.io.InputStream input,
int length)

This would be called by the browser to indicate that data is available in the input stream. This method is called whenever data is written into the input stream by the networking library -- unless the stream type is STREAM_TYPE_AS_FILE_ONLY. In the latter case, onFileAvailable returns the path to the saved stream, and the Pluglet can then "pull" the data.

### Parameters:

streamInfo - This is the interface (of type PlugletStreamInfo) through which the listener can get specific information about the stream, such as MIME type, URL, date modified, etc.
input - The input stream containing the data. This stream can be either a blocking or non-blocking stream.
length - The amount of data that was just pushed into the stream.
onFileAvailable
public void onFileAvailable(
PlugletStreamInfo streamInfo,
Java.lang.String fileName)

This would be called by the browser to indicate the availability of a local file name for the stream data.

### Parameters:

streamInfo - This is the interface (of type PlugletStreamInfo) through which the listener can get specific information about the stream, such as MIME type, URL, date modified, etc.
fileName - This specifies the full path to the file.
onStopBinding
public void onStopBinding(
PlugletStreamInfo streamInfo,
int status)

This would be called by the browser to indicate that the URL has finished loading.

### Parameters:

streamInfo - This is the interface (of type PlugletStreamInfo) through which the listener can get specific information about the stream, such as MIME type, URL, date modified, etc.
status - This is an int (integer) to indicate the success or failure of the load. 0 (NS_OK) indicates successful loading; any other value indicates failure.
getStreamType
public int getStreamType()
Returns the type of stream.

### Parameters:

int - This is an interger representing the stream type:
   1 for STREAM_TYPE_NORMAL
   2 for STREAM_TYPE_SEEK
   3 for STREAM_TYPE_AS_FILE
   4 for STREAM_TYPE_AS_FILE_ONLY

### Interface PlugletTagInfo

All Known Subinterfaces:
PlugletTagInfo2

This interface provides information about the HTML tag on the page.
- Java.1ang.String - getAttribute (Java. lang. String name)
   Returns a value for a particular attribute.
- Java.util.Properties - getAttributes()
   Returns all the name-value pairs found in the tag attributes.
getAttributes
public Java.util.Properties getAttributes()
Returns all the name-value pairs found in the tag attributes.

### Returns:

Returns the attributes of an HTML tag as type Java.util.Properties.
getAttribute
public Java.lang.String getAttribute(Java.lang.String name)
Returns a value for a particular attribute. Returns NULL if the attribute does not exist.

### Parameters:

name - This is the name of the attribute.

### Returns:

Returns the value of the named attribute as a String.

### Interface PlugletTagInfo2

extends PlugletTagInfo

This interface extends PlugletTagInfo, providing additional information about Pluglet tags (elements).
- Java.lang.String - getAlignment()
   Returns the alignment attribute in the tag.
- Java.lang.String - getAttribute(Java.lang.String name)
   Returns a value for a particular attribute.
- Java.util.Properties - getAttributes()
   Returns all the name-value pairs found in the tag attributes.
- int - qetBorderHorizSpace()
   Returns an int for the border horizontal space attribute of the tag (e.g., hspace with IMG tag).
- int - getBorderVertSpace()
   Returns an int for the border vertical space attribute of the tag (e.g., vspace with IMG tag).
- Java.lang.String - getDocumentBase()
   Gets the base for the document.
- Java.lang.String - getDocumentEncoding()
   Returns the character encoding used in the document (e.g., ASCSII, Big5 (Traditional Chinese), Cp1122 (IBM Estonia).
- int - getHeight ()
   Returns an int for the height attribute of the tag.
- Java.lang.String - getTagText()
   Gets the complete text of the HTML tag that was used to instantiate this Pluglet instance.
- Java.lang.String - getTagType()
   Gets the HTML tag type associated with creation of the Pluglet instance.
- int - getUniqueID()
   Returns a unique ID for the current document in which the Pluglet is displayed.
- int - getWidth()
   Returns an int value for the width attribute of the tag.
getAttributes
public Java.util.Properties getAttributes()
Description copied from interface: PlugletTagInfo
Returns all the name-value pairs found in the tag attributes.
Specified by:
getAttributes in interface PlugletTagInfo
Tags copied from interface: PlugletTagInfo

### Returns:

Returns the attributes of an HTML tag as type Java.util.Properties.
getAttribute
public Java.lang.String getAttribute(Java.lang.String name)
Description copied from interface: PlugletTagInfo
Returns a value for a particular attribute. Returns NULL if the attribute does not exist.
Specified by:
getAttribute in interface PlugletTagInfo
Tags copied from interface: PlugletTagInfo

### Parameters:

name - This is the name of the attribute.

### Returns:

Returns the value of the named attribute as a String.
getTagType
public Java.lang.String getTagType()

Gets the HTML tag type associated with creation of the Pluglet instance. Possible types are EMBED, APPLET, and OBJECT.

### Returns:

Returns a String for the tag type as described above.
getTagText
public Java.lang.String getTagText()

Gets the complete text of the HTML tag that was used to instantiate this Pluglet instance.

### Returns:

Returns a String for the tag text as described above.
getDocumentBase
public Java.lang.String getDocumentBase()

Gets the base for the document. The base, in conjunction with a relative URL, specifies the absolute path to the document.

### Returns:

Returns a String representing the document base as described above.
getDocumentEncoding
public Java.lang.String getDocumentEncoding()

Returns the character encoding used in the document (e.g., ASCSII, Big5 (Traditional Chinese), Cp1122 (IBM Estonia). For a list of possible character encodings, see:
http://Java.sun.com/products/jdk/1.1/docs/guide/ intl/intl.doc.html#25303

### Returns:

Returns a String for the document encoding as described above.
getAlignment
public Java.lang.String getAlignment()

Returns the alignment attribute in the tag.

### Returns:

Returns the alignment attribute as described above.
getWidth
public int getWidth()
Returns an int value for the width attribute of the tag.

### Returns:

Returns an integer value for the width as described above.
getHeight
public int getHeight()
Returns an int for the height attribute of the tag.

### Returns:

Returns an integer value for the height as described above.
getBorderVertSpace
public int getBorderVertSpace()

Returns an int for the border vertical space attribute of the tag (e.g., vspace with IMG tag).

### Returns:

Returns an integer value for the border vertical space attribute.
getBorderHorizSpace
public int getBorderHorizSpace()

Returns an int for the border horizontal space attribute of the tag (e.g., hspace with IMG tag).

### Returns:

Returns an integer value for the border horizontal space attribute.
getUniqueID
public int getUniqueID()

Returns a unique ID for the current document in which the Pluglet is displayed.

### Returns:

Returns an ID for the current document as described above.

### Example Pluglet Implementation

The following HTML code block is an example of pluglet instantiation on a web page. Upon encountering the following code block, the browser will begin the process of instantiating pluglets to handle the MIME type content specified by the two lines marked by EMBED and OBJECT tags.

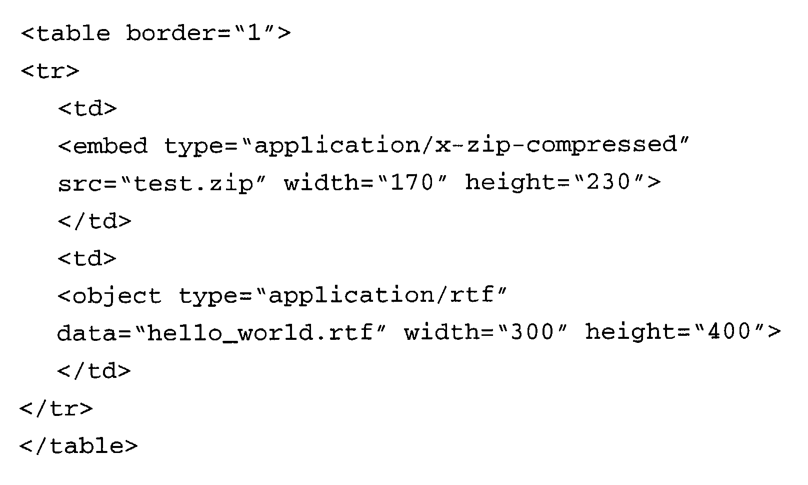

The following Java code block is an example of a pluglet implemention.

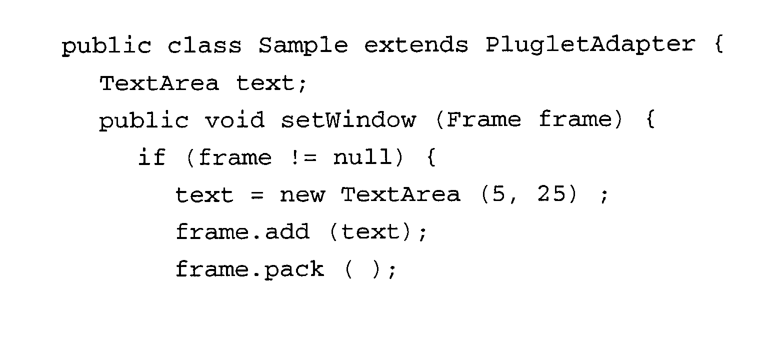

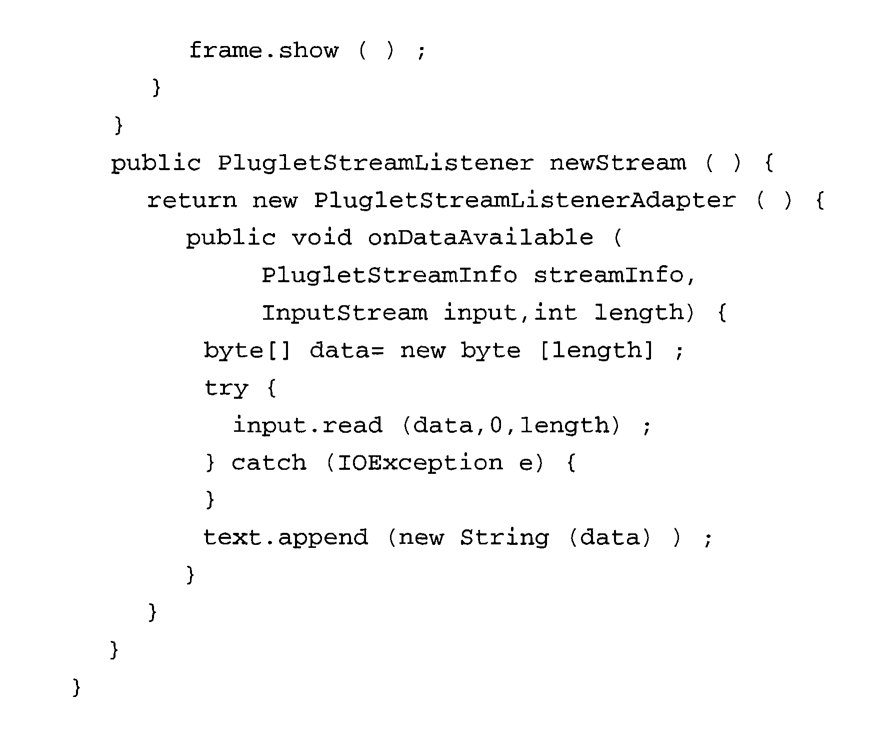

According to another embodiment, an apparatus may be provided, comprising: an API configured to be incorporated in a plug-in, wherein said API enables said plug-in to be executed from a host application and data to be transmitted between said plug-in and said host application; and a functional module configured to be created using said API wherein said functional module extends functionality of said host application.

The apparatus may be incorporated into a computer or a network of computing devices.

Further, functional module may be an executable launcher wherein said API allows said host application to launch executables via said executable launcher, wherein the executables may be Java applets and JavaBean components.

Moreover, the plug-in and/or the executable launcher may be written in a platform independent programming language, which may be Java.

Further, said data may comprise an applet location, an applet identification information and an input data stream. Moreover, said host application may be a web browser. Further, the API may be a pluglet API which further comprises: a pluglet factory interface wherein an instance of said plug-in can be instantiated by said host application; a pluglet interface defining the requirements for a plug-in implementation; and a pluglet stream listener interface enabling data transfer between said plug-in and said host application.

In a further embodiment, the pluglet API uses a pluglet engine API to communicate with said host application and said pluglet engine API allows said host application and said pluglet API to access a Java Virtual Machine (JVM).
Moreover, the pluglet engine API may further comprise a pluglet manager interface enabling information be passed between said host application and said plug-in; a pluglet peer interface defining compatiblility requirements for host applications to run said plug-in; a pluglet tag information interface wherein HTML tag information for said plug-in is provided; and a pluglet stream information interface allowing said plug-in to access information on data streams sent to said plug-in. The plug-in may comprise a manifest file.

It is noted that a computer-readable medium may be provided having a program embodied thereon, where the prosgram is to make a computer or a system of data processing devices to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a computer program product may be provided comprising the computer-readable medium.

### Embodiment of Computer Execution Environment (Hardware)

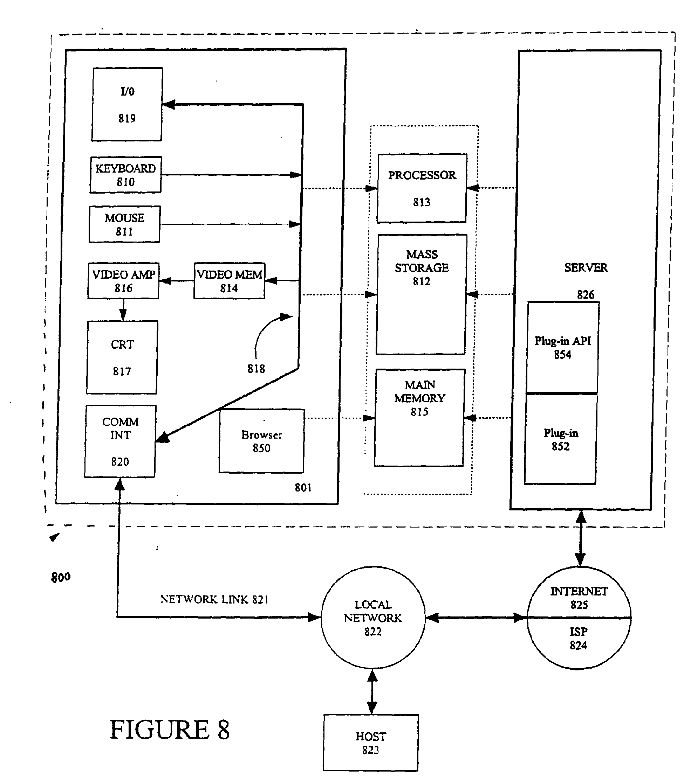

An embodiment of the present invention can be implemented as computer software in the form of computer readable program code executed in a general purpose computing environment such as environment 800 illustrated in Figure 8, or in the form of bytecode class files executable within a Java run time environment running in such an environment, or in the form of bytecodes running on a processor (or devices enabled to process bytecodes) existing in a distributed environment (e.g., one or more processors on a network). A keyboard 810 and mouse 811 are coupled to a system bus 818. The keyboard and mouse are for introducing user input to the computer system and communicating that user input to central processing unit (CPU) 813. Other suitable input devices may be used in addition to, or in place of, the mouse 811 and keyboard 810. I/O (input/output) unit 819 coupled to bi-directional system bus 818 represents such I/O elements as a printer, A/V (audio/video) I/O, etc.

Computer 801 may include a communication interface 820 coupled to bus 818. Communication interface 820 provides a two-way data communication coupling via a network link 821 to a local network 822. For example, if communication interface 820 is an integrated services digital network (ISDN) card or a modem, communication interface 820 provides a data communication connection to the corresponding type of telephone line, which comprises part of network link 821. If communication interface 820 is a local area network (LAN) card, communication interface 820 provides a data communication connection via network link 821 to a compatible LAN. Wireless links are also possible. In any such implementation, communication interface 820 sends and receives electrical, electromagnetic or optical signals which carry digital data streams representing various types of information.

Network link 821 typically provides data communication through one or more networks to other data devices. For example, network link 821 may provide a connection through local network 822 to local server computer 823 or to data equipment operated by ISP 824. ISP 824 in turn provides data communication services through the world wide packet data communication network now commonly referred to as the "Internet" 825. Local network 822 and Internet 825 both use electrical, electromagnetic or optical signals which carry digital data streams. The signals through the various networks and the signals on network link 821 and through communication interface 820, which carry the digital data to and from computer 800, are exemplary forms of carrier waves transporting the information.

Processor 813 may reside wholly on client computer 801 or wholly on server 826 or processor 813 may have its computational power distributed between computer 801 and server 826. Server 826 symbolically is represented in Figure 8 as one unit, but server 826 can also be distributed between multiple "tiers". In one embodiment, server 826 comprises a middle and back tier where application logic executes in the middle tier and persistent data is obtained in the back tier. In the case where processor 813 resides wholly on server 826, the results of the computations performed by processor 813 are transmitted to computer 801 via Internet 825, Internet Service Provider (ISP) 824, local network 822 and communication interface 820. In this way, computer 801 is able to display the results of the computation to a user in the form of output.

Computer 801 includes a video memory 814, main memory 815 and mass storage 812, all coupled to bi-directional system bus 818 along with keyboard 810, mouse 811 and processor 813. As with processor 813, in various computing environments, main memory 815 and mass storage 812, can reside wholly on server 826 or computer 801, or they may be distributed between the two. Examples of systems where processor 813, main memory 815, and mass storage 812 are distributed between computer 801 and server 826 include the thin-client computing architecture developed by Sun Microsystems, Inc., the palm pilot computing device and other personal digital assistants, Internet ready cellular phones and other Internet computing devices, and in platform independent computing environments, such as those which utilize the Java technologies also developed by Sun Microsystems, Inc.

The mass storage 812 may include both fixed and removable media, such as magnetic, optical or magnetic optical storage systems or any other available mass storage technology. Bus 818 may contain, for example, thirty-two address lines for addressing video memory 814 or main memory 815. The system bus 818 also includes, for example, a 32-bit data bus for transferring data between and among the components, such as processor 813, main memory 815, video memory 814 and mass storage 812. Alternatively, multiplex data/address lines may be used instead of separate data and address lines.

In one embodiment of the present invention, the processor 813 is a SPARC microprocessor from Sun Microsystems, Inc., a microprocessor manufactured by Motorola, such as the 680X0 processor, or a microprocessor manufactured by Intel, such as the 80X86 or Pentium processor. However, any other suitable microprocessor or microcomputer may be utilized. Main memory 815 is comprised of dynamic random access memory (DRAM). Video memory 814 is a dual-ported video random access memory. One port of the video memory 814 is coupled to video amplifier 816. The video amplifier 816 is used to drive the cathode ray tube (CRT) raster monitor 817. Video amplifier 816 is well known in the art and may be implemented by any suitable apparatus. This circuitry converts pixel data stored in video memory 814 to a raster signal suitable for use by monitor 817. Monitor 817 is a type of monitor suitable for displaying graphic images.

Computer 801 can send messages and receive data, including program code, through the network(s), network link 821, and communication interface 820. In the Internet example, remote server computer 826 might transmit a requested code for an application program through Internet 825, ISP 824, local network 822 and communication interface 820. The received code may be executed by processor 813 as it is received, and/or stored in mass storage 812, or other non-volatile storage for later execution. In this manner, computer 800 may obtain application code in the form of a carrier wave. Alternatively, remote server computer 826 may execute applications using processor 813, and utilize mass storage 812, and/or video memory 815. The results of the execution at server 826 are then transmitted through Internet 825, ISP 824, local network 822 and communication interface 820. In this example, computer 801 performs only input and output functions.

The platform independent plug-in 852 can reside on server 826. Browser 850 on computer 801 can download platform independent plug-in 852 from server 826 when it encounters a plug-in reference on an HTML page. Plug-in 852 is developed earlier on the server with Plug-in API 854.

Application code may be embodied in any form of computer program product. A computer program product comprises a medium configured to store or transport computer readable code, or in which computer readable code may be embedded. Some examples of computer program products are CD-ROM disks, ROM cards, floppy disks, magnetic tapes, computer hard drives, servers on a network, and carrier waves.

The computer systems described above are for purposes of example only. An embodiment of the present invention may be implemented in any type of computer system or programming or processing environment.

Thus, an implementation of platform independent plug-in to enable the launching of executables in a web browser is described in conjunction with one or more specific embodiments. The present invention is defined by the claims and their full scope of equivalents.

## Claims

1. A method for providing a plug-in, comprising:
incorporating an API in said plug-in, wherein said API enables said plug-in to be executed from a host application and data to be transmitted between said plug-in and said host application;
using said API to create a functional module wherein said functional module extends functionality of said host application; and
integrating said plug-in into said host application.

2. The method of claim 1 wherein said functional module is an executable launcher wherein said API allows said host application to launch executables via said executable launcher.

3. The method of claim 2 wherein said executables are Java applets and JavaBean components.

4. The method of at least one of the claims 1 to 3 wherein at least one of the plug-in and the executable launcher is written in a platform independent programming language.

5. The method of claim 4 wherein said platform independent programming language is Java.

6. The method of at least one of the claims 1 to 5 wherein said data further comprises an applet location, an applet identification information and an input data stream.

7. The method of at least one of the claims 1 to 6 wherein said host application is a web browser.

8. The method of at least one of the claims 1 to 7 wherein said API is a pluglet API which further comprises:
a pluglet factory interface wherein an instance of said plug-in can be instantiated by said host application;
a pluglet interface defining the requirements for a plug-in implementation; and
a pluglet stream listener interface enabling data transfer between said plug-in and said host application.

9. The method of claim 8 wherein said pluglet API uses a pluglet engine API to communicate with said host application and wherein said pluglet engine API allows said host application and said pluglet API to access a Java Virtual Machine (JVM).

10. The method of claim 9 wherein said pluglet engine API further comprises:
a pluglet manager interface enabling information be passed between said host application and said plug-in;
a pluglet peer interface defining compatiblility requirements for host applications to run said plug-in;
a pluglet tag information interface wherein HTML tag information for said plug-in is provided; and
a pluglet stream information interface allowing said plug-in to access information on data streams sent to said plug-in.

11. The method of at least one of the claims 1 to 10 wherein said integrating further comprises writing a manifest file for said plug-in.

12. A program having instructions adapted to make a computer carry out the method of at least one of the claims 1 - 11.

13. A computer readable medium, in which a program is embodied, where the program is to make a computer execute the method of at least one of the claims 1 - 11.

14. A computer program product comprising:
a computer usable medium having computer readable program code embodied therein configured to integrate a plug-in, said computer program product comprising:
computer readable code configured to cause a computer to incorporate an API in said plug-in, wherein said API enables said plug-in to be executed from a host application and data to be transmitted between said plug-in and said host application;
computer readable code configured to cause a computer to use said API to create a functional module wherein said functional module extends functionality of said host application; and
computer readable code configured to cause a computer to integrate said plug-in into said host application.

15. The computer program product of claim 14 wherein said functional module is an executable launcher wherein said API allows said host application to launch executables via said executable launcher.

16. The computer program product of claim 15 wherein said executables are Java applets and JavaBean components.

17. The computer program product of at least one of the claims 14 to 16 wherein at least one of said plug-in and said executable launcher is written in a platform independent programming language.

18. The computer program product of claim 17 wherein said platform independent programming language is Java.

19. The computer program product of at least one of the claims 14 to 18 wherein said data further comprises an applet location, an applet identification information and an input data stream.

20. The computer program product of at least one of the claims 14 to 20 wherein said host application is a web browser.

21. The computer program product of at least one of the claims 14 to 20 wherein said API is a pluglet API which further comprises:
a pluglet factory interface wherein an instance of said plug-in can be instantiated by said host application;
a pluglet interface defining the requirements for a plug-in implementation; and
a pluglet stream listener interface enabling data transfer between said plug-in and said host application.

22. The computer program product of claim 21 wherein said pluglet API uses a pluglet engine API to communicate with said host application and wherein said pluglet engine API allows said host application and said pluglet API to access a Java Virtual Machine (JVM).

23. The computer program product of claim 22 wherein said pluglet engine API further comprises:
a pluglet manager interface enabling information be passed between said host application and said plug-in;
a pluglet peer interface defining compatiblility requirements for host applications to run said plug-in;
a pluglet tag information interface wherein HTML tag information for said plug-in is provided; and
a pluglet stream information interface allowing said plug-in to access information on data streams sent to said plug-in.

24. The computer program product of at least one of the claims 14 to 23 wherein said computer readable code configured to cause a computer to integrate further comprises computer readable code configured to cause a computer to use a manifest file for said plug-in.

25. A apparatus comprising:
an API configured to be incorporated in a plug-in, wherein said API enables said plug-in to be executed from a host application and data to be transmitted between said plug-in and said host application; and
a functional module configured to be created using said API wherein said functional module extends functionality of said host application.

26. The apparatus of claim 25 wherein said functional module is an executable launcher wherein said API allows said host application to launch executables via said executable launcher.

27. The apparatus of claim 26 wherein said executables are Java applets and JavaBean components.

28. The apparatus of at least one of the claims 25 to 27 wherein at least one of said plug-in and said executable launcher is written in a platform independent programming language.

29. The apparatus of claim 30 wherein said platform independent programming language is Java.

30. The apparatus of at least one of the claims 25 to 29 wherein said data further comprises an applet location, an applet identification information and an input data stream.

31. The apparatus of at least one of the claims 25 to 29 wherein said host application is a web browser.

32. The apparatus of at least one of the claims 25 to 31 wherein said API is a pluglet API which further comprises:
a pluglet factory interface wherein an instance of said plug-in can be instantiated by said host application;
a pluglet interface defining the requirements for a plug-in implementation; and
a pluglet stream listener interface enabling data transfer between said plug-in and said host application.

33. The apparatus of claim 32 wherein said pluglet API uses a pluglet engine API to communicate with said host application and wherein said pluglet engine API allows said host application and said pluglet API to access a Java Virtual Machine (JVM).

34. The apparatus of claim 33 wherein said pluglet engine API further comprises:
a pluglet manager interface enabling information be passed between said host application and said plug-in;
a pluglet peer interface defining compatiblility requirements for host applications to run said plug-in;
a pluglet tag information interface wherein HTML tag information for said plug-in is provided; and
a pluglet stream information interface allowing said plug-in to access information on data streams sent to said plug-in.

35. The method of claim 25 to 34 wherein said plug-in further comprises a manifest file.
